# EUROPEAN PATENT SPECIFICATION

(11) **EP 3 916 739 B1**
(45) Date of publication and mention of the grant of the patent: **29.10.2025**
(21) Application number: 18941754.6
(22) Date of filing: 29.12.2018
(51) Int. Cl.: G21C 17/10, G21C 17/025, G01N 29/032, G01N 29/22, G01N 29/27

(54) **NUCLEAR REACTOR WITH SYSTEM FOR ULTRASONIC MONITORING OF A SPACE ABOVE THE CORE OF THE NUCLEAR REACTOR**
KERNREAKTOR MIT SYSTEM ZUR ULTRASCHALLÜBERWACHUNG EINES RAUMES ÜBER DEM KERN DES KERNREAKTORS
RÉACTEUR NUCLÉAIRE AVEC SYSTÈME DE SURVEILLANCE PAR ULTRASONS D'UN ESPACE AU-DESSUS DU COEUR DU RÉACTEUR NUCLÉAIRE

(30) Priority: 26.11.2018 RU 2018141726
(43) Date of publication of application: 01.12.2021
(73) Proprietor: State Atomic Energy Corporation "Rosatom" on Behalf of The Russian Federation, Moscow 119017 (RU)
(72) Inventor: GREBENKIN, Yuriy Petrovich, g. Dimitrovgrad, 433504 (RU); ZHULINSKIY, Sergey Ivanovich, g. Dimitrovgrad, 433507 (RU); NEVEROV, Vitaliy Aleksandrovich, g. Dimitrovgrad, 433507 (RU); SOKOLOV, Viktor Mikhailovich, g. Dimitrovgrad, 433504 (RU)
(74) Representative: Yalçiner Patent and Consulting Ltd.
(86) International application number: PCT/RU2018/000913
(87) International publication number: WO 2020/111964

(56) References cited:
- JP-A- 2000 009 702
- JP-A- 2010 271 319
- JP-A- S5 486 091
- RU-U1- 29 397
- SU-A1- 1 528 235
- US-A- 4 290 849
- US-A- 5 021 210

## Description

The invention relates to nuclear technology and can be used to monitor the state of the liquid metal cooled nuclear reactor above core space. The principle of the ultrasonic monitoring system operation is based on the excitation and response reception of ultrasonic signals reflected from structural elements located in the space (controlled clearance) between the upper level of the heads of fuel assemblies and the lower level of the rotating plugs of the opaque liquid metal (for example, liquid sodium) cooled reactor. This system is used to detect in a controlled space (controlled clearance) obstacles to the rotation of rotating plugs during reloading operations.

Systems in which the scanning ultrasonic beam propagates in the horizontal direction are referred to as horizontal acoustic imaging systems. They are designed to obtain analogs of the optical image of objects located or found in the above core space of the opaque liquid metal cooled reactors. Monitoring of optically opaque above core spaces in reactors can be performed by using ultrasonic waves propagating in liquid metal coolants. **In** this capacity, ultrasonic signals are applicable in reactors with coolants that are opaque to light (sodium, lead, etc.); and the signals can provide analogs of an optical image of objects with good resolution.

To increase the reliability of detection of structural elements, a special ultrasound reflector is installed in the nuclear reactor, and by decreasing the signal from it, it can be judged if there is an object falling into the zone of the ultrasonic beam.

As a rule, the monitoring systems of the reactor above core space are developed taking into account the design of a particular reactor and cannot be transferred to another reactor without certain changes associated with adaptation to the design features of the above core space of each specific apparatus.

There is a system of horizontal acoustic imaging for determining the clearance between the lower part of the control rods and the heads of the fuel assemblies (application N° 58-34799, Japan). The device contains an ultrasonic transducer placed on a bar and connected to an ultrasonic generator and, through an amplifier, with a signal processing and identification device, an ultrasound reflector. In this device, the bar with the ultrasonic transducer is rotated at a constant angular velocity and is moved in height after each revolution. During one revolution, ultrasonic pulses are successively emitted, and reflected pulses are received in the intervals between them.

The disadvantages of this technical solution is that it is not always possible to determine the presence or absence of an object in the above core space, when the beams reflected from the object do not fall into the transducer's plane.

There is a system for ultrasonic monitoring of the position of structural elements in the above core space of a liquid metal cooled nuclear reactor (US patent Ns 4290849), including an ultrasonic transducer for emitting and receiving a pulsed ultrasonic signal, means for turning the sensor at a given angle, main and additional reflectors having several planes oriented in the scanning direction, means for supplying power to the transducer and means for displaying ultrasonic signals. The incident ultrasonic wave successively reflects from the additional ultrasound reflector, the main reflector and the object (if any) located in the clearance between the control rod components and the fuel assembly heads, and then returns to the ultrasonic transducer along the path already traveled. To eliminate the interference of signals of the incident and reflected ultrasonic waves, the reflector planes are placed at different distances from the transducer.

In the known technical solution, two segments of straight lines corresponding to the path of the ultrasonic beam from the ultrasound source to the ultrasound reflector and from the ultrasound reflector to the ultrasound receiver are indicated as the location of the detected obstacle, and the answer is not given on which of the segments the obstacle is located.

A system is known relating to a nuclear reactor with an ultrasonic device for detecting a gap between structural elements in the space above the core of a nuclear reactor (JP S54 86091 A). The system comprises a sound reflector 9 and an ultrasonic transducer 10, a transmitter and a signal processing device. The ultrasonic signal 17 is reflected from the sound reflector 9 and returns to the transducer 10, passing the path equal to the gap G, and if the presence of the fuel assembly 8 is detected in the gap G, the ultrasonic signal 17 becomes weaker, and the output voltage of the transducer 10 lowers. Thus, the value of the gap G is determined by the value of the output voltage of the transducer 10.

In this technical solution, the gap corresponding to the zone through which the ultrasonic beam passes from the ultrasound source to the ultrasound reflector is indicated as a location of the detected obstacle, and no information is provided about the place where exactly the obstacle in located the gap.

The task of this technical solution is to improve the reliability of obstacles detection in the monitored space above the core and to determine their location.

To solve this problem, the system of ultrasonic monitoring of a space above a core of a nuclear reactor, the space is filled with a liquid-metal coolant, comprising an ultrasound reflector and a scanning ultrasonic mechanism with a plurality of drives, including a supporting bar with a plurality of sealed ultrasonic transducers, each having an acoustic axis coinciding with a horizontal plane intersecting the space filled with the liquid-metal coolant. The space (gap) is monitorable by the scanning ultrasonic mechanism extends between the lower elevations of disengaged control rod components of the nuclear reactor and the upper elevations of heads of the fuel assemblies). The ultrasound reflector hasa shape of a ring on which at least one row of vertical cylindrical rods is arranged, the ultrasound reflector is attached to one of the thermal screens surrounding the core of the nuclear reactor, and being nearest of the termal screens in distance to a nuclear reactor vessel. The distance between the adjacent cylindrical rods in a row is less than a distance between the adjacent fuel assemblies (the pitch of the reactor lattice).

Placing the ultrasound reflector (rings with cylindrical rods) on the thermal shield located at the closest distance from the reactor vessel provides monitoring of the position of standard structures and detection of obstacles to the rotation of rotating plugs in the entire controlled volume of the above core space.

Cylindrical rods are located in rows equidistantly from the center of this ring and evenly around its circumference (for the convenience of automatic control over the level of the reflected signal when scanning using the ultrasound reflector ultrasonic beam from the central cell):
The height of the cylindrical rods is such that they cover the entire clearance between the upper level of the fuel assembly heads and the lower level of the reactor rotating plugs and the lower elevations of the disengaged control rod components, and provide the possibility of performing layer-by-layer scanning in the entire controlled space.

One of the cylindrical rods is located at a different (less or greater in relation to the rest of the rods) distance from the center of the ring and is uniquely determined during ultrasonic scanning by the time of echo pulse receipt. It is convenient to take the direction of the axis of the ultrasonic transducer towards this rod as the origin of the rotation angle of the ultrasonic transducer and use it to more accurately calculate the angles of its rotation during scanning.

The pitch with which the cylindrical rods are located on the ring in a row is less than the pitch between assemblies. Otherwise (with a larger pitch) those floating assemblies will not be detected, which, when scanning using the ultrasound reflector ultrasonic beam, will appear in the gap between the cylindrical rods.

In cases where the floating assembly does not cover the entire controlled clearance, but entered it only with its upper narrow part (head) to the height of one ultrasonic scanning layer, the shadow from the head may fall into the gap between the cylindrical rods, and the floating will not be detected by the system. To exclude such cases, the cylindrical rods of the next row are located in the gap between the cylindrical rods of the previous row.

To ensure the possibility of unambiguous determination of the origin of the rotation angle of the ultrasonic transducer and a more accurate calculation of angles of its rotation during scanning, one of the cylindrical rods is located at a selected (smaller or larger in relation to the rest of the rods) distance from the center of this ring.

The cylindrical rods are fixed on the ring in such a way that they are located on the extensions of the lines passing through the center of the core and the centers of the heads of the distant fuel assemblies.

The lateral surface of the cylindrical rods is rough, for example, in the form of a cruciform knurling, which increases the reflectivity of the cylindrical rods and ensures the return of the ultrasonic signal to the ultrasonic transducer regardless of its location (in the center or at the periphery of the controlled space) during the monitoring process.

During long-term operation of the reactor, the geometric dimensions and shape of its elements change, including an increase in the vertical deviation of the generatrix of the cylindrical surface of the rods, which leads to a significant decrease in the amplitude of the echo signal and, as a consequence, to a decrease in the probability of detecting floating distant assemblies.

The presence of roughness increases the likelihood of detecting floating distant assemblies. When using the ultrasonic monitoring system of the above core space in a "large" reactor, it is advisable to form a corner reflector on the lateral surface of the cylindrical rods, which shall have the ability to return the incident ultrasonic beam in the opposite direction, regardless of the presence of a small angle between the acoustic axis of the corner reflector and the axis of the scanning ultrasonic beam. When forming the ultrasound reflector, it is necessary to place vertical cylindrical rods on the ring so that the axis of the corner reflector is directed to the center of the ring.

As a corner reflector on the lateral surface of the cylindrical rods, at least one conical recess with a right angle at the apex is made, ending with a through hole, the axis of which coincides with the axis of the conical recess and the direction of the axis of the ultrasonic transducer and makes a right angle with the axis of the cylindrical rods.

Cylindrical rods can be arranged in the form of two (or more) annular rows, offset relative to each other so that the rods of the outer row are relative to the direction to the center of the ring between adjacent rods of the inner row.

A scanning ultrasonic mechanism with drives, including a supporting bar with sealed ultrasonic transducers (emitter and receiver of ultrasonic signals) is installed in the space under the fuel assembly overload channel located on the periphery of the small rotating plug of the reactor, or in the space freed up after removing the embedded pipe from the reactor, which is intended to be placed in the center of the core of a loop channel or other irradiation device.

Cylindrical rods are installed on a ring with a certain pitch, so that, when scanning them one by one, the ultrasonic signals reflected from adjacent rods and reaching the ultrasonic transducer overlap in space at least at a level of 0.707 in order to exclude the loss of an informative signal about the presence of an obstacle in space between directions to adjacent rods, for example, about the presence of a floating assembly.

The pitch between the cylindrical rods is associated with the pitch between the assemblies and the diameter of the ultrasonic beam at a level of 0.707, depending on the transducer device, the ultrasound frequency used, the velocity of its propagation in the medium, and the distance to the irradiated object, i.e. to the adjacent rods, namely, the pitch between the cylindrical rods is set less than the pitch between the assemblies and is chosen so that the ultrasonic beams reflected from the adjacent rods overlap on the receiving surface of the ultrasonic transducer.

This ensures the presence of an informative signal (a decrease in the signal from the ultrasound reflector) in the presence of an obstacle in the path of the ultrasonic beam, regardless of how far from the ultrasonic transducer the obstacle appears and what is the slope of its surface.

The system of ultrasonic monitoring of the nuclear reactor above core space is illustrated on the figures.

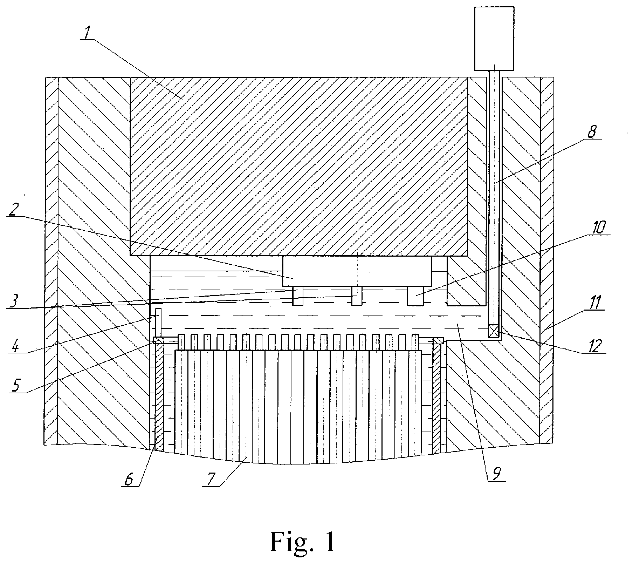

Fig. 1 shows a vertical cross-section of a reactor with elements of the acoustic imaging system located outside the rotating plugs, where:
   1 is a large rotating plug; 2 is a small rotating plug with control rod components; 3 are control rod guide pipes; 4 is a cylindrical rod; 5 is a ring; 6 is a thermal shield; 7 is a fuel assembly; 8 is an acoustic imaging probe; 9 is a liquid metal coolant; 10 is a reloading channel; 11 is a reactor vessel; 12 is an ultrasonic transducer
Fig. 2 shows a horizontal section of a reactor with elements of the ultrasonic monitoring system of the nuclear reactor above core space, located outside the rotating plugs, where:
   4 are cylindrical rods; 5 is a ring; 11 is a reactor vessel; 12, 13 are ultrasonic transducers. A, B, C, D are sectors of confident detection of obstacles to the rotation of rotating plugs located in the far zone from the corresponding ultrasonic transducer.
Fig. 3 shows a horizontal section of a nuclear reactor with elements of the ultrasonic monitoring system for the above core space, where:
   1 is a large rotating plug (shown conventionally); 2 is a small rotating plug (shown conventionally); 4 are cylindrical rods; 5 is a ring; 11 is a reactor vessel; 14 is a central channel; 15 is a reloading channel; ultrasonic transducers 12 and 13 are installed in channels 14 and 15, respectively.
Figs. 4-7 show different variants of conical recesses on the lateral surface of cylindrical rods, which is especially important for large reactors (core diameter of 4-9 m).

The device works as follows.

Ultrasonic transducers 12 and 13 emit a sequence of ultrasonic signals into the liquid metal coolant 9, extending over the liquid metal coolant 9 along the acoustic axis of each ultrasonic transducer, localized in space in the form of an ultrasonic beam, and during the time intervals between the ultrasonic signals excited in succession, the response ultrasonic signals are received, reflected from structural elements located in the nuclear reactor above core space, namely, in the controlled clearance between the upper level of the fuel assembly heads and the lower level of the rotating plugs (the lower elevations of the devices mounted on the rotating plugs). By the decrease in the amplitude of the echo signals from the cylindrical rods 4 (the so-called bottom signals), the presence of an obstacle shading the ultrasonic beam is judged, and by the presence of the echo signal received in the time interval between the emitted and the bottom signals, it is concluded on the presence of an object with a surface that reflects part of the ultrasonic beam energy in the opposite direction. Layer-by-layer scanning of the above core space with an ultrasonic beam is performed by fixing the ultrasonic transducer 12 at different heights and simultaneously rotating the probe 8.

There are two options for placing the acoustic imaging probe 8 in the reactor:
- stationary (in a specially provided place outside the rotating plugs 1 and 2);
- removable (an embedded pipe in which during the micro-campaign there was any irradiation device is removed from the central channel of the reactor, and an acoustic imaging probe 8 is installed in its place).

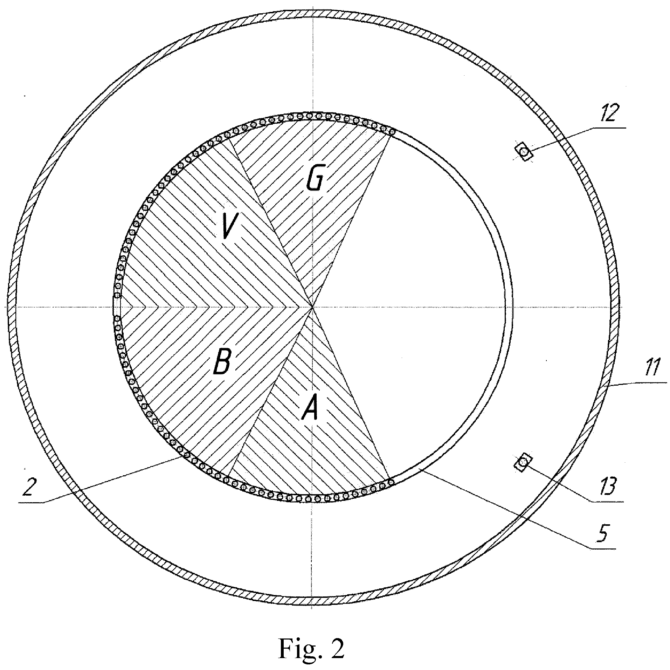

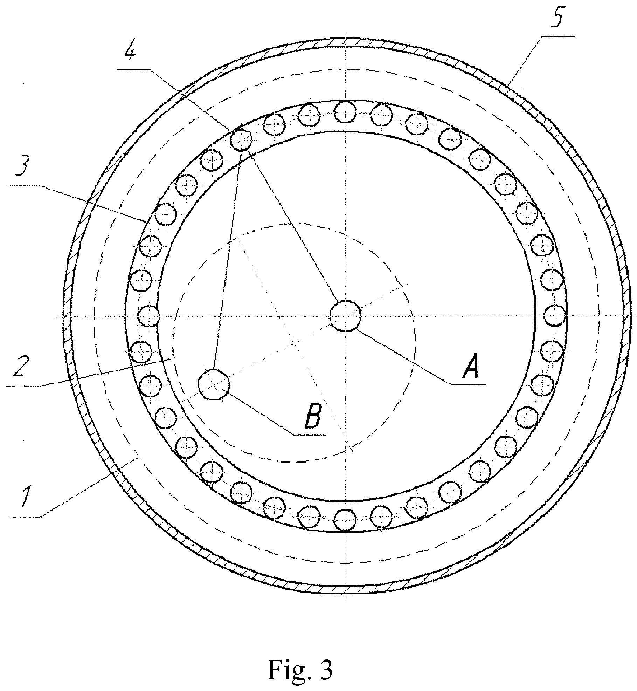

An example of a stationary placement of the acoustic imaging probe 8 in the reactor is shown in Fig. 1 and 2, an example for a removable version is shown in Fig. 3.

The system of ultrasonic monitoring of the position of structural elements in the nuclear reactor above core space is put into operation on the shutdown reactor before the start of reloading of core assemblies in order to confirm the absence of mechanical connection of the rotating plugs with the core.

With the stationary placement of the acoustic imaging probe 8 in the reactor, the ultrasonic transducer 12 emits a sequence of ultrasonic signals into the liquid metal coolant 9 and receives the reflected signals that came in the opposite direction (an echo signal from one of the cylindrical rods 4 ("bottom" signal) and echo signals from objects caught in the ultrasonic beam path, such as uncoupled control rod components, the head or body of a floating or unsettled fuel assembly, bells for batch control, manipulation tools and foreign objects. The echo signal propagation time and the azimuth of the ultrasonic transducer 12 determine the location of the object that is in the path of the ultrasonic beam. If this object does not create an echo signal extracted from the background noise, then it is detected by a decrease in the amplitude of the "bottom" signal, and only the azimuth of the ultrasonic transducer 12 is used to determine the location. In case of detection of a significant decrease in the amplitude of the "bottom" signal, recorded when scanning the above core space by the ultrasonic transducer 13, the intersection of ultrasonic beams corresponding to the fixed azimuths indicates the most probable location of the object.

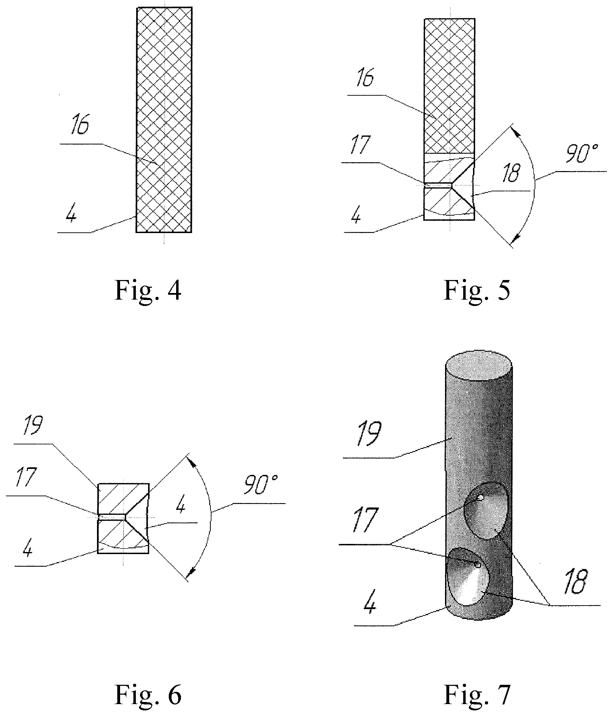

To ensure the amplitude of the "bottom" signal, many times higher than the background noise level, the cylindrical rods 4 are oriented by the axes of the conical recesses to the axis of the ultrasonic transducer, and the angle at the apex of the conical recesses is straight to provide a specular reflection of the scanning beam (Fig. 6). The axes of the conical recesses of the cylindrical rods 4, located in sector C, are alternately directed as follows: even ones, to the ultrasonic transducer 12, odd ones, to the ultrasonic transducer 13. The axes of the conical recesses of the cylindrical rods 4, located in sector D, are directed to the ultrasonic transducer 13. The axes of the conical recesses of the cylindrical rods 4, located in sector B, are alternately directed as follows: even ones, to the transducer 13, odd ones, to the transducer 12. The axes of the conical recesses of the cylindrical rods 4, located in sector A, are directed to the transducer 12.

The ultrasound reflector, made in the form of an intermittent row of cylindrical rods, provides a more accurate calculation of the angle of the transducer rotation than the ultrasound reflector, made continuous in the form of a solid cylindrical screen.

To minimize the probability of missing a signal about a foreign object located in the above core space, the pitch between the cylindrical rods shall be commensurate with the pitch of the reactor lattice, and the diameter of the cylindrical rods shall be commensurate with the diameter of the fuel assembly head.

The diameter of the focal spot, in which the main energy of the ultrasonic beam is concentrated, is expediently chosen commensurate with the apparent size of the conical recess. It depends on the size of the ultrasonic transducer, the ultrasound frequency used, the propagation velocity of the ultrasound in the medium, and the distance to the cylindrical rod. The minimum allowable pitch between cylindrical rods simultaneously covered with a focal spot meets Pearson's criterion, according to which the echo signals from these rods are considered distinguishable. If the combination of influencing factors is such that echo signals from adjacent cylindrical rods are difficult to distinguish, then the pitch between adjacent rods is increased, and a second row of such rods is added, located along a concentric circle of larger diameter in the gaps between the rods of the first row.

If the height of the controlled above core space allows, then two or more conical recesses can be made in the cylindrical rods, each of which is oriented towards its own ultrasonic transducer (Fig. 7).

With a removable version of placement of the acoustic imaging probe 8 in the reactor (Fig. 3), the ultrasonic transducers 12 and 13 are installed in the central reloading channels 14 and 15, respectively. Fig. 3 conventionally shows the large rotating plug 1 and the small rotating plug 2. Cylindrical rods 4 can be smooth and have a conical recess oriented to the central channel 14, or with a part of the lateral surface without a conical recess with a right angle at the apex; such surface may be made relief, for example, in the form of a cruciform knurling (Figs. 5-7). The use of relief shape for the lateral surface of the cylindrical rods allows the use of the mirror-shadow method for the ultrasonic transducer 13 located in the reloading channel 15 or any other channel suitable for installing the probe 8.

## Claims

1. A nuclear reactor comprising fuel assemblies (7), a thermal shield (6) surrounding a core of the nuclear reactor, a plurality of fuel assembly heads having a plurality of upper elevations, a plurality of control rod components (3) having a plurality of lower elevations, where a space is defined between the lower elevations of the control rod components (3) and the upper elevations of the fuel assembly heads, the space is filled with a liquid metal coolant (9), and a system of ultrasonic monitoring of a space above the core of the nuclear reactor, wherein the system of ultrasonic monitoring comprising:
an ultrasound reflector and
a scanning ultrasonic mechanism with a plurality of drives including a supporting bar with a plurality of sealed ultrasonic transducers (12, 13) each having an acoustic axis coinciding with a horizontal plane intersecting the space filled with the liquid metal coolant (9), wherein the space is monitorable by the scanning ultrasonic mechanism between the lower elevations of the disengaged control rod components (3) of the nuclear reactor and the upper elevations of the fuel assembly heads (7),
**characterized in that**
the ultrasound reflector has a shape of a ring (5) on which at least one row of vertical cylindrical rods (4) is arranged, the ultrasound reflector is attached to the thermal shield (6) in distance to a nuclear reactor vessel (11), wherein a pitch between the adjacent cylindrical rods (4) in a row is less than a pitch between the adjacent fuel assemblies.

2. The nuclear reactor according to claim 1, wherein the cylindrical rods (4) are arranged in rows equidistant from a center of the ring (5) and evenly around its circumference.

3. The nuclear reactor according to claim 1, wherein one of the vertical cylindrical rods (4) is located at a distance from the center of the ring (5) being less or greater than a distance from all other vertical cylindrical rods (4) of the row to the center of the ring (5).

4. The nuclear reactor according to claim 1, wherein the lateral surface of the cylindrical rods (4) is rough, for example, in a form of a cruciform knurling.

5. The nuclear reactor according to claim 1, wherein the cylindrical rods (4) have at least one conical recess with a right angle at an apex ending with a through hole having an axis coinciding with the axis of the conical recess and the direction of the axis of the ultrasonic transducer and makes a right angle with the axis of at least one of the cylindrical rods (4).

6. The nuclear reactor according to claim 1, wherein when the scanning ultrasonic mechanism is installed in different penetrations of rotating plugs of the nuclear reactor, conical recesses are made on the cylindrical rods (4), a number of the conical recesses is the same as a the number of penetrations in the rotating plugs, each of the conical recesses has a right angle at an apex ending in a through hole having an axis coinciding with the axis of the conical recess and directed towards the axis of one of the penetrations, wherein the conical recesses are distributed along the height of the cylindrical rods (4) coinciding with the size of the monitorable space, wherein the axes of the conical recesses having the same elevation are directed towards the axis of the same penetration.

## Patentansprüche

1. Ein Kernreaktor, umfassend Brennelemente (7), einen thermische Abschirmung (6), der einen Kern des Kernreaktors umgibt, eine Vielzahl von Brennelementköpfen mit einer Vielzahl von oberen Höhenmarkierungen, eine Vielzahl von Steuerstabkomponenten (3) mit einer Vielzahl von unteren Höhenmarkierungen, wobei zwischen den unteren Höhenmarkierungen der Steuerstabkomponenten (3) und den oberen Höhenmarkierungen der Brennelementköpfe ein Raum definiert ist, der mit einem flüssigen Metallkühlmittel (9) gefüllt ist, und ein System zur Ultraschallüberwachung eines Raums über den Kern des Kernreaktors, wobei das System zur Ultraschallüberwachung Folgendes umfasst:
einen Ultraschallreflektor und einen Ultraschall-Abtastmechanismus mit einer Vielzahl von Antrieben, der eine Tragstange mit einer Vielzahl von abgedichteten Ultraschallwandlern (12, 13) umfasst, von denen jeder eine akustische Achse hat, die mit einer horizontalen Ebene zusammenfällt, die den mit dem flüssigen Metallkühlmittel (9) gefüllten Raum schneidet, wobei der Raum zwischen den unteren Höhenmarkierungen der ausgekuppelten Steuerstabkomponenten (3) des Kernreaktors und den oberen Höhenmarkierungen der Brennelementköpfe (7) durch den Ultraschall-Abtastmechanismus überwachbar ist,
**dadurch gekennzeichnet, dass** der Ultraschallreflektor die Form eines Rings (5) hat, auf dem mindestens eine Reihe vertikaler zylindrischer Stäbe (4) angeordnet ist; der Ultraschallreflektor ist an der thermische Abschirmung (6) in einem Abstand vom Kernreaktorbehälter (11) angebracht, wobei der Abstand zwischen den benachbarten zylindrischen Stäben (4) in einer Reihe kleiner ist als der Abstand zwischen den benachbarten Brennelementen.

2. Kernreaktor nach Anspruch 1, wobei die zylindrischen Stäbe (4) in Reihen mit gleichem Abstand von einem Mittelpunkt des Rings (5) und gleichmäßig um seinen Umfang herum angeordnet sind.

3. Kernreaktor nach Anspruch 1, wobei sich einer der vertikalen zylindrischen Stäbe (4) in einem Abstand vom Mittelpunkt des Rings (5) befindet, der kleiner oder größer ist als der Abstand aller anderen vertikalen zylindrischen Stäbe (4) der Reihe zum Mittelpunkt des Rings (5).

4. Kernreaktor nach Anspruch 1, wobei die Mantelfläche der zylindrischen Stäbe (4) rau ist, beispielsweise in Form einer kreuzförmigen Rändelung.

5. Kernreaktor nach Anspruch 1, wobei die zylindrischen Stäbe (4) mindestens eine konische Aussparung mit einem rechten Winkel an einer Spitze aufweisen, die mit einem Durchgangsbohrung endet, deren Achse mit der Achse der konischen Aussparung und der Richtung der Achse des Ultraschallwandlers zusammenfällt und einen rechten Winkel mit der Achse mindestens eines der zylindrischen Stäbe (4) bildet.

6. Kernreaktor nach Anspruch 1, wobei, wenn der Ultraschall-Abtastmechanismus in verschiedenen Durchdringungen der rotierenden Stopfen des Kernreaktors installiert ist, konische Aussparungen an den zylindrischen Stäben (4) angebracht sind; die Anzahl der konischen Aussparungen der Anzahl der Durchdringungen in den rotierenden Stopfen entspricht, jede der konischen Aussparungen an einer Spitze einen rechten Winkel aufweist, der in einem Durchgangsbohrung endet, dessen Achse mit der Achse der konischen Aussparung zusammenfällt und auf die Achse einer der Durchdringungen gerichtet ist, wobei die konischen Aussparungen entlang der Höhe der zylindrischen Stäbe (4) verteilt sind, die mit der Größe des überwachbaren Raums zusammenfällt, wobei die Achsen der konischen Aussparungen mit gleichen Höhenmarkierungen auf die Achse derselben Durchdringung gerichtet sind.

## Revendications

1. Un réacteur nucléaire comprenant des assemblages combustibles (7), un bouclier thermique (6) entourant un cœur de réacteur nucléaire, plusieurs têtes des assemblages combustibles avec plusieurs portions supérieures, plusieurs barres de commande (3) avec plusieurs portions inférieures, dans lequel un espace étant défini entre les portions inférieures des barres de commande (3) et les portions supérieures des têtes des assemblages combustibles, ledit espace étant rempli de métal liquide de refroidissement (9), et un système de contrôle par ultrasons de l'espace au-dessus du cœur de réacteur nucléaire, ledit système de contrôle par ultrasons comprenant :
un réflecteur à ultrasons et un mécanisme de balayage par ultrasons avec plusieurs actionneurs, y compris une barre de support pour plusieurs transducteurs ultrason étanches (12, 13) possédant chacun un axe acoustique coïncidant avec un plan horizontal qui passe par l'espace rempli de métal liquide de refroidissement (9), ledit espace entre les portions inférieures des barres de commande (3) de réacteur nucléaire et les portions supérieures des têtes des assemblages combustibles (7) étant capable d'être contrôlé par le mécanisme de balayage par ultrasons,
**caractérisé par le fait que** le réflecteur par ultrasons présente une forme d'un anneau (5) sur lequel au moins une rangée de barres cylindriques verticales (4) est disposée, le réflecteur à ultrasons est fixé sur le bouclier thermique (6) à une distance d'une cuve de réacteur nucléaire (11), le pas entre les barres cylindriques adjacentes (4) en une rangée étant inférieur au pas entre les assemblages combustibles adjacents.

2. Le réacteur nucléaire selon la revendication 1, dans lequel les barres cylindriques (4) sont disposées en rangées équidistantes du centre de l'anneau (5) de manière uniforme autour de sa circonférence.

3. Le réacteur nucléaire selon la revendication 1, dans lequel une des barres cylindriques verticales (4) est située à une distance du centre de l'anneau (5), ladite distance étant inférieure ou supérieure à une distance entre toutes les autres barres cylindriques verticales (4) de la rangée et le centre de l'anneau (5).

4. Le réacteur nucléaire selon la revendication 1, dans lequel la surface latérale des barres cylindriques (4) est irrégulière présentée, par exemple, sous la forme de stries cruciformes.

5. Le réacteur nucléaire selon la revendication 1, dans lequel les barres cylindriques (4) possèdent au moins un évidement conique situé perpendiculairement au sommet terminant par un orifice traversant, son axe coïncidant avec l'axe de l'évidement conique et avec la direction de l'axe du transducteur ultrason, et formant un angle droit avec l'axe d'au moins une barre cylindrique (4).

6. Le réacteur nucléaire selon la revendication 1, dans lequel, lorsque le mécanisme de balayage ultrasonique est installé dans de différentes pénétrations des bouchons rotatifs du réacteur nucléaire, les évidements coniques sont faits sur les barres cylindriques (4), le nombre d'évidements coniques est le même que le nombre de pénétrations dans les bouchons rotatifs, chacun d'évidements coniques formant un angle droit avec un sommet terminant par un orifice traversant, son axe coïncidant avec l'axe de l'évidement conique et étant dirigé vers l'axe d'une des pénétrations, les évidements coniques étant répartis sur la hauteur des barres cylindriques (4) correspondant à la dimension de l'espace à surveiller, les axes des évidements coniques situés au même niveau étant dirigés vers l'axe de la même pénétration.
